(19) Europäisches Patentamt
European Patent Office
Office européen des brevets

(11) **EP 4 163 837 A1**

(12) **EUROPEAN PATENT APPLICATION**

(43) Date of publication:
**12.04.2023 Bulletin 2023/15**

(21) Application number: **21201664.6**

(22) Date of filing: **08.10.2021**

(51) International Patent Classification (IPC):
**G06N 3/08** (2006.01)   **G05D 1/00** (2006.01)
**G05D 1/02** (2006.01)   **B60W 30/14** (2006.01)

(52) Cooperative Patent Classification (CPC):
**G06N 3/08; B60W 30/14; G05D 1/0088; G05D 1/0293**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **PANKIEWICZ, Nikodem**
  **30-653 Krakow (PL)**
• **TURLEJ, Wojciech**
  **30-349 Krakow (PL)**
• **ORLOWSKI, Mateusz**
  **31-457 Krakow (PL)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR DETERMINING A DRIVING TRAJECTORY AS TRAINING DATA FOR MACHINE LEARNING BASED ADAPTIVE CRUISE CONTROL**

(57)     A computer implemented method for determining a driving trajectory as training data for machine learning based adaptive cruise control comprises the following steps carried out by computer hardware components: determining a cost function; determining at least one side condition; and determining the driving trajectory based on solving an optimization problem, wherein the optimization problem is based on the cost function and the at least one side condition

_500_

Fig. 5

Processed by Luminess, 75001 PARIS (FR)

**Description**

FIELD

The present disclosure relates to methods and systems for determining a driving trajectory as training data for machine learning based adaptive cruise control.

BACKGROUND

Imitation learning is a promising decision-making technique based on artificial neural networks. However, training of imitation learning methods may be cumbersome.

Accordingly, there is a need to provide enhancements to training of imitation learning methods.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining a driving trajectory as training data for machine learning based adaptive cruise control, the method comprising the following steps performed (in other words: carried out) by computer hardware components: determining a cost function; determining at least one side condition; and determining the driving trajectory based on solving an optimization problem, wherein the optimization problem is based on the cost function and the at least one side condition.

In other words, training data is obtained by solving an optimization problem.

According to an embodiment, the cost function comprises at least one of a speed limit execution term, a velocity change term, and a time term related to time in a sensible range to a leading target.

According to an embodiment, the cost function comprises a combination of two or more of a speed limit execution term, a velocity change term, and a time term related to time in a sensible range to a leading target. For example, the combination may be a weighted sum. It has been found that using a weighted sum may allow considering several cost function terms in a single optimization problem.

According to an embodiment, the at least one side condition comprises at least one acceleration threshold and/or at least one velocity threshold and/or at least one distance threshold related to a distance to a leading target.

According to an embodiment, the driving trajectory comprises at least one of a position, a velocity, an acceleration or a steering angle. The driving trajectory may include a temporal sequence of the respective values of position, velocity, acceleration and/or steering angle.

According to an embodiment, the driving trajectory is determined based on an initial trajectory. The initial trajectory may be considered as a starting trajectory, based on which the optimization is carried out. The optimization may be carried out iteratively, wherein in each iteration, starting from a previous trajectory, an updated trajectory, which may be better in terms of the cost function (while still fulfilling the constraints or side conditions) than the previous trajectory, may be determined.

According to an embodiment, the initial trajectory is determined based on a driving simulation.

According to an embodiment, the initial trajectory is determined based on a real world driving scenario (for example measurements taken during actual driving on a real road).

In another aspect, the present disclosure is directed at a computer implemented method for training machine learning based adaptive cruise control, the method comprising the following steps carried out by computer hardware components: determining a driving trajectory as training data based on the computer implemented method as described herein; and training the machine learning based adaptive control based on the training data.

According to an embodiment, the training is based on imitation learning. According to an embodiment, the training is based on MARWIL method.

In another aspect, the present disclosure is directed at a computer implemented method for machine learning based adaptive cruise control, wherein the method is trained according to the computer implemented method as described herein.

In another aspect, the present disclosure is directed at a computer system, said computer system the method comprising the following steps performed (in other words: carried out) by computer hardware components: configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

With the methods and systems as described herein, imitation machine learning may be applied to an adaptive cruise control application. An optimization based imitation learning for intelligent adaptive cruise control may be provided.

DRAWINGS

Exemplary embodiments and functions of the present disclosure are described herein in conjunction with the following drawings, showing schematically:

Fig. 1    the acceleration of the leading target, human driver and optimized one;

Fig. 2    the speed of the leading target, human driver and the speed calculated from the optimized spline function which represents the acceleration function;

Fig. 3    the jerk values of the leading target, human driver and the jerk calculated from the optimized spline function which represents the acceleration function;

Fig. 4    the distance between the human driver and the leading target and between the optimized state and the leading target;

Fig. 5    a flow diagram illustrating a method for determining a driving trajectory as training data for machine learning based adaptive cruise control according to various embodiments; and

Fig. 6    a computer system with a plurality of computer hardware components configured to carry out steps of a computer implemented method for determining a driving trajectory as training data for machine learning based adaptive cruise control according to various embodiments.

DETAILED DESCRIPTION

Imitation learning (IL) is a decision-making technique based on (artificial) neural networks. The neural network may state the core of behavior policy and may be trained to select the best possible action from a set of available actions in each state throughout an overall decision-making process.

Imitation Learning methods may require a dataset that contains the trajectories of state-action tuples ($s_t$, $a_t$) for a plurality of consecutive points t in time The dataset may usually be collected by experts in the field. An example of such data may be a car ride with a human as a driver. In that case, a state-action pair (in other words, a tuple consisting of a state and an action) may be a description of each situation (in other words: state) and the driver's response (in other words: action) to the situation. Based on that dataset, the neural network may be trained to output a policy which is supposed to be a close imitation of the expert's policy.

The output policy may be (at least almost) as good as the expert's one. To obtain good results, each state-action tuple may be rated by a reward function. Utilization of a reward signal may allow to distinguish between actions with respect to their quality and train the network to imitate good actions and avoid bad actions. A training method which exploits the reward signals may result in good performance of outcome policy.

A problem of IL may be in the quality of the (training) dataset, especially in the imperfection of demonstrated actions. Even for a human expert, it may be hard to always choose the best decision. This may especially be the case when actions depend on the environment state and the human is only aware of the previous states and is not able to predict the future. Moreover, erroneous actions may infer from human factors such as distraction, fatigue, lack of attention or even from the lack of qualifications.

According to various embodiments, a solution for the problem of imitation learning which concerns the existence of suboptimal expert's actions in the training dataset, what causes suboptimal results, may be provided. According to various embodiments, this issue may be alleviated by optimizing expert's actions, before using them in the training process. Additionally, this improvement may be used in the development of Adaptive Cruise Control (ACC) module. The ACC agent may be trained and it may the advantage of this method over pure imitation learning may be shown empirically.

Various embodiments may assume that the agent's actions influence only the agent's state and affect the rest of the environment only in a negligible way. It may be assumed that the transition function $Ft(s, a) \rightarrow (S_{t+1})$ to calculate the next state ($S_{t+1}$), knowing state ($s_t$) in time $t$ and action ($a_t$) performed in $s_t$ are known.

Imitation learning may require a demonstration dataset ($D_T$) that contains trajectories $T$ which are composed of successive (i.e. successive in time t) states ($s_t$), actions taken in each state ($a_t$), and a reward ($r_t$) granted for each action ($a_t$).

All states in the trajectory may be known, and a Transition Function (Ft), which approximates the environment state when actions differ from original one, may be known. Thanks to these two assumptions, according to various embodiments, a set of optimal decisions while ensuring fidelity to reality may be calculated.

The optimal decision may describe the action for each step in the trajectory. The set of actions may be parametrized by the vector $x$ that contains $n$ parameters, which are subject to optimization.

The optimization process may aim to minimize the cost function -f(x), which may be equivalent to maximizing the cost function f(x), concerning the Transition Function $Ft(s, x)$, for example subject to the transition function being non-negative. According to various embodiments, to obtain the optimal action, the following optimization problem may be solved:

$$\max_{x} f(x) = \sum_{j=1}^{m} w_j c_j(x)$$

$$subject\ to: \ Ft\ (x) \geq 0$$

where $c_j$ for j=1..m may denote cost terms weighted by predefined weights $w_j$ for j = 1..m.

The transition function may define constraints or side conditions for the optimization problem.

The cost function and the transition function may be chosen depending on the application of the imitation learning method.

According to various embodiments, a training process of an artificial agent responsible for selecting appropriate acceleration during driving may be provided. The agent may act as an intelligent adaptive cruise control (AICC), which comes down to taking care of the following factors:

- Maximizing speed;
- Minimizing the sum of the absolute value of acceleration;
- Keeping sensible distance to the leading target; and
- Minimizing jerk concerning the leading target

According to various embodiments, training the agent may include the following three steps:

  a. Collecting the demonstration dataset ($D_T$) by a human expert;
  b. Improving actions in trajectories with the optimization process; and
  c. Training agent with MARWIL algorithm using the demonstration dataset ($D_T$).

Regarding step a) (collection the demonstration dataset), according to various embodiments, a small dataset with 3 trajectories, each of which consists of 100 seconds of driving may be collected. To have full control over the process, it may be experimented using a high-level traffic simulation package "TrafficAI". The expert made his best to fulfill expectations of perfect ACC controller. As the major function of ACC is to follow the leading target, it may be ensured that most of the time the target was present and tractable. To increase the difficulty of the task, the leading target in given scenarios may be set to behave in an unstable manner and oscillate around the acceleration setpoint, which may result in a large variance of target's speed.

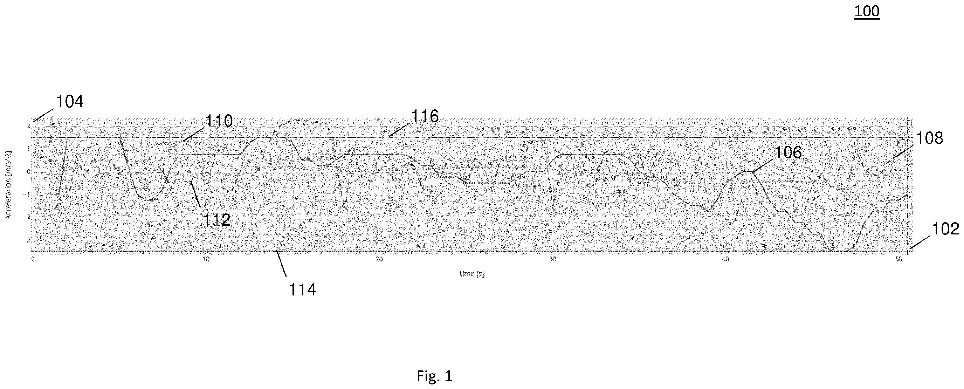

Regarding step b) (optimization process), the optimization may be aimed at selecting optimal acceleration values along the entire driving episode for each trajectory in the dataset. In Fig. 1 to Fig. 4 below, the course of one of the trajectories is illustrated. Fig. 1 to Fig. 4 show the acceleration, speed and jerk of the vehicle controlled by an expert and the target vehicle, as well as the distance between them. Additionally, corresponding plots for optimized acceleration are illustrated.

Fig. 1 shows an illustration 100 of the acceleration of the leading target (illustrated by dashed line 108), the acceleration of the human driver (in other words, of the ego vehicle; illustrated by solid line 106), and the optimized acceleration (illustrated by dotted line 110). Horizontal axis 102 represents time, and vertical axis 104 represents the respective accelerations. The dots 112 show the actual value of optimized coefficients which are used to calculate the real value of the spline function. The horizontal lines 114 and 116 represent the limit values of acceleration (for example a lower limit of -3.5 $m/s^2$ and an upper limit of 1.5 $m/s^2$).

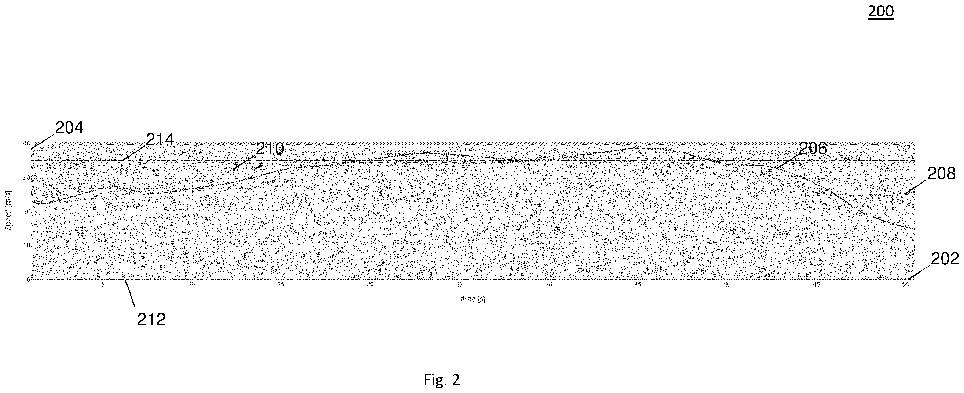

Fig. 2 shows an illustration 200 of the speed of the leading target (illustrated by dashed line 208), the speed of the human driver (in other words, of the ego vehicle; illustrated by solid line 206), and the speed calculated from the optimized spline function which represents the acceleration function (illustrated by dotted line 210). Horizontal axis 202 represents time, and vertical axis 204 represents the respective speeds. The horizontal lines 212 and 214 represent the limit values of speed (for example a lower limit of 0 and an upper limit of 35 m/s).

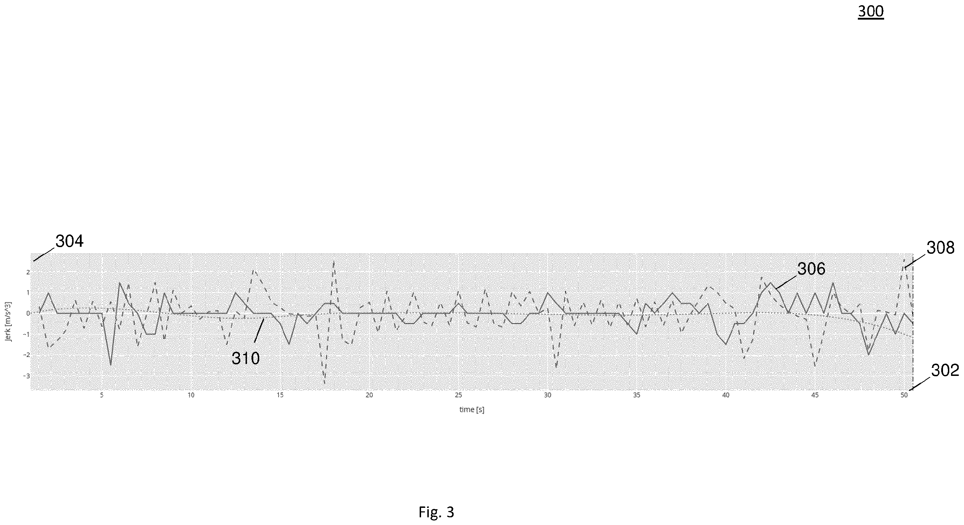

Fig. 3 shows an illustration 200 of the jerk values of the leading target (illustrated by dashed line 308), the jerk values of the human driver (in other words, of the ego vehicle; illustrated by solid line 306), and the jerk calculated from the optimized spline function which represents the acceleration function (illustrated by dotted line 310). Horizontal axis 302 represents time, and vertical axis 304 represents the jerk values.

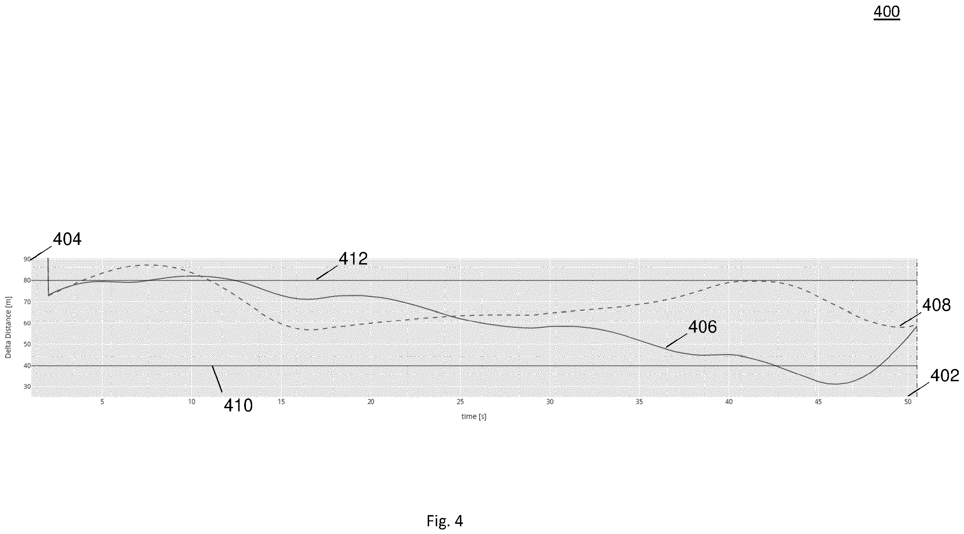

Fig. 4 shows an illustration 400 of the distance between the human driver and the leading target (illustrated by solid line 406) and the distance between the optimized state and the leading target (illustrated by dashed line 408). Horizontal axis 402 represents time, and vertical axis 404 represents the respective distances. It will be noticed that the function optimization contributed to the reduction of the distance, which prevented the cutting of other vehicles in. The horizontal lines 410 and 412 represent the limit values of the distance from agent to leading vehicle (for example a range between 40m and 80 m).

According to various embodiments, in order to ensure differentiability in the optimization process, the acceleration may be expressed as a continuous spline function. The spline function may be parameterized by an integer number n of coefficients, for example one coefficient for every second of the trajectory. The spline function may be chosen as a basis for acceleration curvature, and it may allow to represent the solution in a smooth, differentiable form and reduce the nonlinearity of the cost function compared to the polynomial representation.

According to various embodiments, optimization may be constrained by an inequality constraint to enforce physical feasibility. Thanks to this function, it may be possible to calculate the changes in agent's state which are caused by the acceleration adjustment. According to various embodiments, the agent's position, velocity, distance to the leading target and a jerk value may be calculated. For example, the optimization process may involve constraints of these values to the following ranges:

- Acceleration: <-3.5,1.5> [m/s2]
- Velocity: <0, 35> [m/s]
- Distance to the leading target: <40-80> [m]

According to various embodiments, three main cost terms may be incorporated into the cost function to achieve a trajectory that is desired from the perspective of perfect adaptive cruise controller:

- Maximizing speed limit execution;
- Minimizing the velocity changes; and
- Maximizing time in the sensible range to the leading target.

Regarding maximizing speed limit execution, this term may be introduced to achieve optimized actions which make full use of available speed limitation. At the same time, this term and related additional constraints may result in avoiding exceeding the speed limit or stopping a car on the road.

Minimizing the velocity changes (which may be represented by a sum of (absolute) accelerations or an integral of (absolute) acceleration) may induce the resulting acceleration function to be as flat as possible, thereby minimizing the acceleration and jerk values over the trajectory. Such minimization may increase the passengers' comfort and reduce fuel consumption.

Regarding maximizing time in the sensible range to the leading target, it may be assumed that the agent's distance to the leading target should be in an optimal span. The minimal range value may depend on the current speed of traffic participants and their maximal possible values of acceleration and deacceleration. To simplify the calculations, a constant value (for example 40m) may be assumed. This value may be dynamically adjusted as described above.

Regarding the maximum range value, it shouldn't be too high, to avoid possible cutting in of other cars, nor too small, to leave the space for agent's maneuvers. For example, this value may be set to 80m.

Regarding step c) (training agent with MARWIL using demonstration dataset ($D_T$)), after optimizing all trajectories, the trajectories may be used those for the training of the artificial neural network which states for behavior policy of our AICC agent. To do, for example the MARWIL method may be used for imitation learning. Experimental training may for example use only those 3 trajectories and may last for 1500 iterations.

To compare the method according to various embodiments with a typical imitation learning approach, a second training may be conducted for which original trajectories as training dataset may be used. All other parameters that could affect the training result may left the same as in the previous case.

After both trainings, the new behavior policies may be evaluated in the test environment 10 times each. Based on the obtained trajectories, the KPIs may be calculated and compared.

Table 1 shows the KPIs values from evaluation of the two behavior policies. The left column shows the values for agent which was generated with optimized trajectories according to various embodiments, while the right column presents the results of the agent generated with original trajectories.

Table 1.

| KPI | Policy from optimized dataset | Policy from original dataset |
|---|---|---|
| Average Speed | 20.30382 | 13.78086 |
| Average Acc | -0.03676 | -0.76344 |
| Average Abs Acc | 0.11241 | 0.88355 |
| Average Jerk | 0.34265 | 2.71903 |
| Distance to Front Target | 137.77112 | 140.35574 |
| Oscillation on Front Target Rate | 0.53751 | 1.33469 |
| Oscillation on Empty Lane Rate | 0.11415 | 1.02436 |
| Loosing Tracking Front Target | 0.80000 | 0.70000 |
| Steps in Sensible Range From Target | 0.26783 | 0.06136 |
| Heavy Braking Events | 0.20000 | 0.60000 |
| Safety Violation | 0.40000 | 1.10000 |

As can be seen from Table 1, the behavior policy which was generated using optimized trajectories according to various embodiments may outperform the second policy obtained from original trajectories.

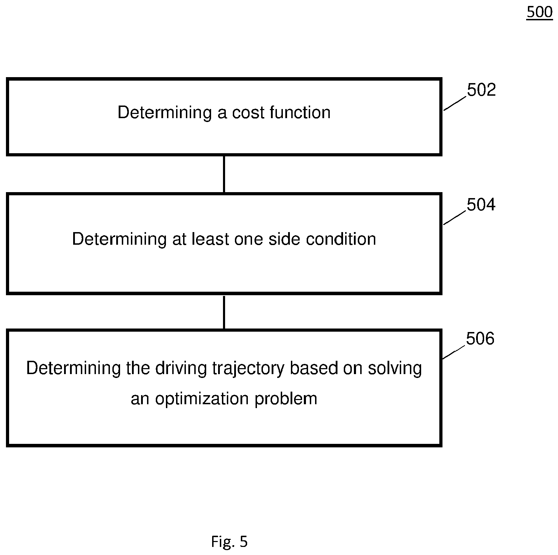

Fig. 5 shows a flow diagram 500 illustrating a method for determining a driving trajectory as training data for machine learning based adaptive cruise control according to various embodiments. At 502, a cost function (which may also be referred to as objective function) may be determined. At 504, at least one side condition (which may also be referred to as constraint) may be determined. At 506, the driving trajectory may be determined based on solving an optimization problem, wherein the optimization problem is based on the cost function and the at least one side condition.

According to various embodiments, the cost function may include at least one of a speed limit execution term, a velocity change term, and a time term related to time in a sensible range to a leading target.

According to various embodiments, the cost function may include or may be a combination of two or more of a speed limit execution term, a velocity change term, and a time term related to time in a sensible range to a leading target.

According to various embodiments, the at least one side condition may include or may be at least one acceleration threshold and/or at least one velocity threshold and/or at least one distance threshold related to a distance to a leading target.

According to various embodiments, the driving trajectory may include or may be at least one of a position, a velocity, an acceleration or a steering angle.

According to various embodiments, the driving trajectory may be determined based on an initial trajectory.

According to various embodiments, the initial trajectory may be determined based on a driving simulation.

According to various embodiments, the initial trajectory may be determined based on a real world driving scenario.

Each of the steps 502, 504, 506, and the further steps described above may be performed by computer hardware components.

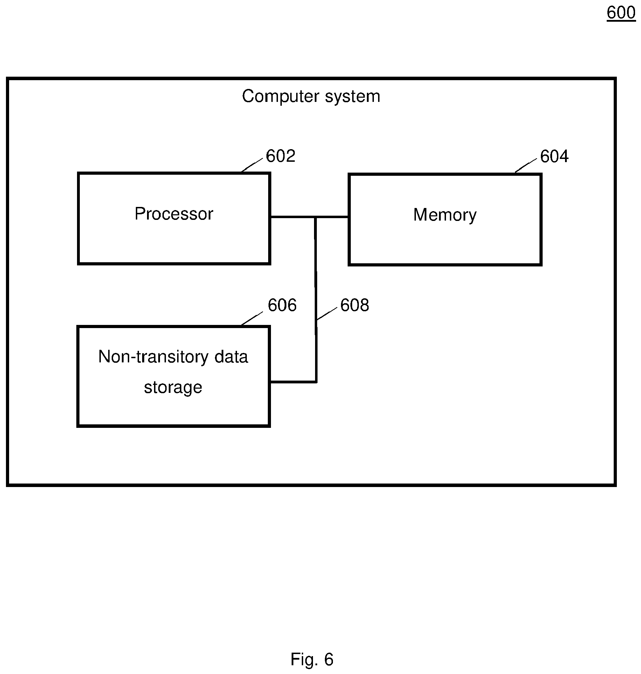

Fig. 6 shows a computer system 600 with a plurality of computer hardware components configured to carry out steps of a computer implemented method for determining a driving trajectory as training data for machine learning based adaptive cruise control according to various embodiments. The computer system 600 may include a processor 602, a memory 604, and a non-transitory data storage 606.

The processor 602 may carry out instructions provided in the memory 604. The non-transitory data storage 606 may store a computer program, including the instructions that may be transferred to the memory 604 and then executed by the processor 602.

The processor 602, the memory 604, and the non-transitory data storage 606 may be coupled with each other, e.g. via an electrical connection 608, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 600.

With the methods and devices according to various embodiments, a solution for a problem of imitation learning methods (which is the vulnerability to the suboptimal actions in the training dataset) may be provided. According to various embodiments, a method for enhancing the dataset by optimization process which fine-tunes the expert's actions may be provided, which improves the result of training. Such optimization may be applied to various control problems, as long as they satisfy the requirements of knowing all states in the trajectory and a Transition Function Ft as described above. According to various embodiments, the method may be used for training an effective ACC agent.

Reference numeral list

| 100 | illustration of the acceleration of the leading target, human driver and optimized one |
|---|---|
| 102 | horizontal axis |
| 104 | vertical axis |
| 106 | solid line |
| 108 | dashed line |
| 110 | dotted line |
| 112 | dots |
| 114 | horizontal line |
| 116 | horizontal line |

| 200 | illustration of the speed of the leading target, human driver and the speed calculated from the optimized spline function which represents the acceleration function |
|---|---|
| 202 | horizontal axis |
| 204 | vertical axis |
| 206 | solid line |
| 208 | dashed line |
| 210 | dotted line |
| 212 | horizontal line |
| 214 | horizontal line |

| 300 | illustration of the jerk values of the leading target, human driver and the jerk calculated from the optimized spline function which represents the acceleration function |
|---|---|
| 302 | horizontal axis |
| 304 | vertical axis |
| 306 | solid line |
| 308 | dashed line |
| 310 | dotted line |

| 400 | illustration of the distance between the human driver and the leading target and between the optimized state and the leading target |
|---|---|
| 402 | horizontal axis |
| 404 | vertical axis |
| 406 | solid line |
| 408 | dashed line |

| 410 | horizontal line |
| 412 | horizontal line |
| 500 | flow diagram illustrating a method for determining a driving trajectory as training data for machine learning based adaptive cruise control according to various embodiments |
| 502 | step of determining a cost function |
| 504 | step of determining at least one side condition |
| 506 | step of determining the driving trajectory based on solving an optimization problem |
| 600 | computer system according to various embodiments |
| 602 | processor |
| 604 | memory |
| 606 | non-transitory data storage |
| 608 | connection |

**Claims**

1. Computer implemented method for determining a driving trajectory as training data for machine learning based adaptive cruise control,
   the method comprising the following steps carried out by computer hardware components:

   - determining (502) a cost function;
   - determining (504) at least one side condition; and
   - determining (506) the driving trajectory based on solving an optimization problem, wherein the optimization problem is based on the cost function and the at least one side condition.

2. The computer implemented method of claim 1,
   wherein the cost function comprises at least one of a speed limit execution term, a velocity change term, and a time term related to time in a sensible range to a leading target.

3. The computer implemented method of claim 1,
   wherein the cost function comprises a combination of two or more of a speed limit execution term, a velocity change term, and a time term related to time in a sensible range to a leading target.

4. The computer implemented method of at least one of claims 1 to 3,
   wherein the at least one side condition comprises at least one acceleration threshold and/or at least one velocity threshold and/or at least one distance threshold related to a distance to a leading target.

5. The computer implemented method of at least one of claims 1 to 4, wherein the driving trajectory comprises at least one of a position, a velocity, an acceleration or a steering angle.

6. The computer implemented method of at least one of claims 1 to 5, wherein the driving trajectory is determined based on an initial trajectory.

7. The computer implemented method of claim 6,
   wherein the initial trajectory is determined based on a driving simulation.

8. The computer implemented method of at least one of claims 6 or 7, wherein the initial trajectory is determined based on a real world driving scenario.

9. Computer implemented method for training machine learning based adaptive cruise control,
   the method comprising the following steps carried out by computer hardware components:

   - determining a driving trajectory as training data based on the computer implemented method of at least one of claims 1 to 8; and
   - training the machine learning based adaptive control based on the training data.

10. The computer implemented method of claim 9,
    wherein the training is based on imitation learning.

11. The computer implemented method of at least one of claims 9 or 10, wherein the training is based on MARWIL method.

12. Computer implemented method for machine learning based adaptive cruise control, wherein the method is trained according to the computer implemented method of at least one of claims 9 to 11.

13. Computer system (600), the computer system (600) comprising a plurality of computer hardware components configured to carry out steps of the computer implemented method of at least one of claims 1 to 12.

14. Vehicle comprising the computer system (600) of claim 13.

15. Non-transitory computer readable medium comprising instructions for carrying out the computer implemented method of at least one of claims 1 to 12.

Fig. 1

Fig. 2

Fig. 3

EP 4 163 837 A1

Fig. 4

500

| Determining a cost function | 502 |

| Determining at least one side condition | 504 |

| Determining the driving trajectory based on solving an optimization problem | 506 |

Fig. 5

<u>600</u>

Computer system

602

Processor

604

Memory

606

608

Non-transitory data storage

Fig. 6

Europäisches
Patentamt

European
Patent Office

Office européen
des brevets

## EUROPEAN SEARCH REPORT

Application Number

EP 21 20 1664

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PULVER HENRY ET AL: "PILOT: Efficient Planning by Imitation Learning and Optimisation for Safe Autonomous Driving", 2021 IEEE/RSJ INTERNATIONAL CONFERENCE ON INTELLIGENT ROBOTS AND SYSTEMS (IROS), IEEE, 27 September 2021 (2021-09-27), pages 1442-1449, XP034050232, DOI: 10.1109/IROS51168.2021.9636862 [retrieved on 2021-12-03] * Sections II-IV and Appendix A * ----- | 1-15 | INV. G06N3/08 G05D1/00 G05D1/02 B60W30/14 |
| A | ZHAOBIN MO ET AL: "A Physics-Informed Deep Learning Paradigm for Car-Following Models", ARXIV.ORG, CORNELL UNIVERSITY LIBRARY, 201 OLIN LIBRARY CORNELL UNIVERSITY ITHACA, NY 14853, 14 July 2021 (2021-07-14), XP091001498, DOI: 10.1016/J.TRC.2021.103240 * Sections 3 and 4 * ----- | 1-15 | |
| A | WU YUANKAI ET AL: "A Deep Reinforcement Learning Based Car Following Model for Electric Vehicle", SMART CITY APPLICATION, [Online] vol. 2, no. 5, 12 September 2019 (2019-09-12), XP055899169, DOI: 10.33142/sca.v2i5.813 Retrieved from the Internet: URL:https://206.189.43.69/index.php/sca/article/viewFile/813/730> [retrieved on 2022-03-09] * Sections 3 and 4 * ----- | 1-15 | TECHNICAL FIELDS SEARCHED (IPC) G06N G05D B60W |

The present search report has been drawn up for all claims

| Place of search | Date of completion of the search | Examiner |
|---|---|---|
| The Hague | 10 March 2022 | Targon, Valerio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)